# EUROPÄISCHE PATENTSCHRIFT

(11) **EP 2 217 888 B1**
(45) Veröffentlichungstag und Bekanntmachung des Hinweises auf die Patenterteilung: **02.12.2015**
(21) Anmeldenummer: 08855819.2
(22) Anmeldetag: 04.12.2008
(51) Int. Cl.: G01F 1/58, F16B 21/07

(54) **ELEKTRODE FÜR EIN MAGNETISCH-INDUKTIVES DURCHFLUSSMESSGERÄT**
ELECTRODE FOR A MAGNETIC-INDUCTIVE FLOWMETER
ÉLECTRODE POUR UN DÉBITMÈTRE À INDUCTION MAGNÉTIQUE

(30) Priorität: 05.12.2007 DE 102007058898
(43) Veröffentlichungstag der Anmeldung: 18.08.2010
(73) Patentinhaber: Endress + Hauser Flowtec AG, 4153 Reinach (CH)
(72) Erfinder: KERROM, Roger, 79540 Lörrach (DE)
(74) Vertreter: Andres, Angelika Maria
(86) Internationale Anmeldenummer: PCT/EP2008/066767
(87) Internationale Veröffentlichungsnummer: WO 2009/071615

(56) Entgegenhaltungen:
- EP-A- 1 519 160
- WO-A-2008/059020
- DE-A1- 19 634 383
- DE-B- 1 098 727
- US-A- 5 847 287

## Beschreibung

Die Erfindung betrifft eine Elektrode für ein magnetisch-induktives Durchflussmessgerät zur Bestimmung des Volumendurchflusses eines elektrisch leitenden Mediums durch ein Messrohr, wobei das Messrohr zumindest in dem Bereich, in dem es mit dem Medium in Kontakt kommt, nicht elektrisch leitend ist, wobei die Elektrode einen Elektrodenschaft und einen Elektrodenkopf aufweist, wobei der Elektrodenkopf mit dem Medium in Kontakt ist, wobei der Elektrodenschaft mehrere in Längsachse der Elektrode hintereinander liegende, kegelstumpfförmige Dichtlippen aufweist und wobei der Elektrodenschaft in eine Bohrung mit einem Durchmesser d in die Wandung des Messrohrs eingepresst ist.

Magnetisch-induktive Durchflussmessgeräte nutzen für die volumetrische Strömungsmessung das Prinzip der elektrodynamischen Induktion aus: Senkrecht zu einem Magnetfeld bewegte Ladungsträger des Mediums induzieren im gleichfalls im Wesentlichen senkrecht zur Durchflussrichtung des Mediums und senkrecht zur Richtung des Magnetfeldes angeordneten Elektroden eine Spannung. Die in den Elektroden induzierte Messspannung ist proportional zu der über den Querschnitt des Messrohres gemittelten Strömungsgeschwindigkeit des Mediums und somit zum Volumenstrom. Ist die Dichte des Mediums bekannt, lässt sich der Massestrom in der Rohrleitung bzw, dem Messrohr bestimmen. Die Messspannung wird üblicherweise über das Elektrodenpaar abgegriffen, das in dem Bereich des Messrohres angeordnet ist, in dem die maximale Magnetfeldstärke und folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Das Messrohr kann entweder aus einem elektrisch leitfähigen Material, z.B. Edelstahl, gefertigt sein, oder aus einem elektrisch isolierenden Material bestehen. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht je nach Temperatur und Medium beispielsweise aus einem thermoplastischen, einem duroplastischen oder einem elastomeren Kunststoff. Es sind jedoch auch magnetisch-induktive Durchflussmessgeräte mit einer keramischen Auskleidung bekannt.

Eine Elektrode lässt sich grob unterteilen in einen Elektrodenkopf, der zumindest teilweise mit einem Medium, welches das Messrohr durchströmt, in Kontakt ist, und einen Elektrodenschaft, der fast vollständig in der Wandung des Messrohres eingebracht ist.

Die Elektroden sind neben dem Magnetsystem die zentralen Komponenten eines magnetisch-induktiven Durchflussmessgerätes. Bei der Ausgestaltung und Anordnung der Elektroden ist darauf zu achten, dass sie sich möglichst einfach in dem Messrohr montieren lassen und dass nachfolgend im Messbetrieb keine Dichtigkeitsprobleme auftreten; darüber hinaus sollen sich die Elektroden durch eine empfindliche und gleichzeitig störungsarme Messsignalerfassung auszeichnen.

Neben den Elektroden, die zum Abgriff eines Messsignais dienen, werden oftmals zusätzliche Elektroden in das Messrohr eingebaut, z.B. eine Bezugs- oder Erdungselektrode für das elektrische Referenzpotential zwischen Messgerät und Medium oder eine das Medium überwachende Elektrode zur Erkennung teilgefüllter oder leerer Messrohre.

Grundsätzlich lassen sich zwei Typen von Elektrodenkonstruktionen unterscheiden:
- die von außen in das Messrohr eingesetzt und montiert werden und
- die von innen in das Messrohr eingesetzt und montiert werden.

Bei dem zuerst genannten Typ ist die Ausgestaltung des Elektrodenkopfes durch den Durchmesser der Bohrung eingegrenzt: eine Montage von außen ist dann möglich, wenn der Durchmesser des Elektrodenkopfes kleiner oder gleich dem Durchmesser der Bohrung in der Wandung des Messrohres ist, in der die Elektrode platziert ist. Bevorzugt handelt es sich bei den von außen montierbaren Elektroden um Stiftelektroden, wie sie beispielsweise in der EP 0 892 252 A1 beschrieben sind. Bevorzugt werden Stiftelektroden bei Messrohren mit kleinen Nennweiten eingesetzt, also in Bereichen, in denen die Montage von innen aufgrund der kleinen Abmessungen nur schwierig oder überhaupt nicht zu bewerkstelligen ist. Allerdings ist der Einsatz von Stiftelektroden nicht auf magnetisch-induktive Durchflussmessgeräte mit kleinen Nennweiten beschränkt.

Bei dem zweiten Typ von Elektrodenkonstruktionen entfällt die Einschränkung im Hinblick auf die Dimensionierung des Elektrodenkopfs; hier muss lediglich der Elektrodenschaft so ausgestaltet sein, dass er in die Bohrung montiert werden kann. Der Elektrodenkopf kann je nach Applikation sowohl in Größe als auch in Form in weiten Bereichen variieren. Von innen montierbare Elektroden haben üblicherweise z.B. pilz- bzw. linsen- oder tellerförmige Elektroden köpfe.

Elektroden sind üblicherweise in eine Bohrung in der Wandung eines Messrohres flüssigkeitsdicht eingesetzt. Dies gelingt durch die in Längsrichtung der Elektrode im Bereich des Elektrodenschafts hintereinander liegenden kegelstumpfförmigen Dichtlippen, wie z.B. in EP 0 892 252 A1 offenbart. Stiftelektroden lassen sich ohne großen Aufwand auch in einem Messrohr mit großer Nennweite bestehend aus Kunststoff oder einem Messrohr mit Kunststoff-Liner montieren. Die in Längsrichtung der Elektrode hintereinander liegenden kegelstumpfförmigen Dichtlippen des Elektrodenschafts dienen der Befestigung der Elektrode und der Abdichtung des Messrohrinnenraumes nach außen hin.

Beim Einpressen einer Stiftelektrode in eine vorgefertigte Bohrung in die Wandung eines Messrohres ergeben sich mechanische Spannungen, insbesondere wenn der Durchmesser der Bohrung kleiner ist als der Außendurchmesser der Stiftelektrode. Dies hat bei einer aus Kunststoff bestehenden Wandung zur Folge, dass der Kunststoff in spannungsfreie Gebiete "fließt" und die Elektrode formschlüssig in der Bohrung verankert. Die Elektrode ist somit gegen das Herausdrücken infolge eines Betriebsdruckes im Messrohr gesichert. Weiterhin ist das Messrohr durch das formschlüssige Einhüllen des Elektrodenschafts nach außen hin abgedichtet.

Bei geringen Wanddicken, wie sie z.B. bei Messrohren mit kleinen Nennweiten, z.B. DN 15, auftreten, werden Standard-Elektroden mit einer reduzierten Anzahl von Dichtlippen eingesetzt. Versuche haben gezeigt, dass die Sicherheit gegen ein Herausdrücken der Elektrode dann bei höheren Betriebsdrücken im Messrohr nicht mehr gewährleistet ist. Weiterhin wird beim Einpressen der Elektrode die Bohrung durch die dem Elektrodenkopf am nächsten liegende Dichtlippe aufgeweitet, so dass nicht mehr genügend die Bohrung umgebendes Material zur formschlüssigen Verankerung der Elektrode zur Verfügung steht und die nachfolgenden Dichtlippen sich nicht mehr in der Wand der Bohrung verkeilen und mit ihrem maximalen Durchmesser nicht mit der Wand der Bohrung abschließen. Insbesondere bei Wandungen aus Kunststoff weicht ein Teil des Kunststoffs durch mechanische Spannungen bedingt zum Inneren des Messrohrs hin aus und bildet dort Auswölbungen, die den Durchmesser des Messrohrs örtlich verringern und somit das Strömen der Flüssigkeit beeinflussen.

Der Erfindung liegt die Aufgabe zugrunde, eine Elektrode vorzuschlagen, welche die Bohrung auch bei höheren Betriebsdrücken sicher verschließt. Die Aufgabe wird erfindungsgemäß durch die Elektrode nach Patentanspruch 1 gelöst. Durch eine solche Konstruktion ist die Elektrode gegen das Herauspressen infolge eines Betriebsdrucks gesichert und dichtet das Messrohr flüssigkeitsdicht ab.

Gemäß einer vorteilhaften Weiterbildung ist die Elektrode so in die Bohrung eingebracht, dass die Elektrode im Wesentlichen auf Höhe der Messrohrinnenseite endet. Folglich wird die Strömung des Mediums nicht durch die Elektrode behindert und ein möglicher Messfehler ausgeschlossen. Gemäß einer günstigen Ausgestaltung ist ab einer dem Elektrodenkopf folgenden Dichtlippe der maximale Durchmesser einer dieser ersten Dichtlippe folgenden Dichtlippe immer größer als der maximale Durchmesser einer vorhergehende Dichtlippe. Dabei ist der Elektrodenkopf dem Medium zugewandt. Auf diese Weise dringen die Dichtlippen bis hin zu ihrem jeweiligen maximalen Durchmesser in die Wand der Bohrung ein, so dass genügend die Bohrung umgebendes Material zum formschlüssigen Abdichten zur Verfügung steht.

Gemäß einer vorteilhaften Ausführungsform ist der maximale Durchmesser aufeinander folgender Dichtlippen, beginnend mit der dem Elektrodenkopf am nächsten liegenden Dichtlippe größer als der maximale Durchmesser einer vorhergehenden Dichtlippe. Diese Ausführungsform gewährleistet eine größtmögliche Sicherheit gegen das Herausdrücken der Elektrode bei hohen Betriebsdrücken im Messrohr mit einer feststehenden Anzahl an Dichtlippen.

In einer nutzbringenden Version weist die Elektrode eine konische Gesamtform auf. Als Maß für die Konizität einer Elektrode lässt sich ein Winkel angeben, der die Steigung des Mantels des Kegelstumpfs relativ zu seiner zylindrischen Grundform angibt. Durch eine konische Gesamtform wird ein Abschließen der Elektrode mit der Wand der Bohrung ebenso gewährleistet wie ein Abdichten des Messrohrs und eine erhöhte Sicherheit gegen das Hinauspressen der Elektrode aufgrund eines Betriebsdrucks.

Gemäß einer vorteilhaften Variante besteht die Wandung des Messrohres zumindest im Bereich der Bohrung aus einem plastisch verformbaren Material, z.B. Kunststoff. Dies ermöglicht das formschlüssige Einhüllen des Elektrodenschafts durch das verformbare Material und gewährleistet eine undurchlässige Abdichtung und eine stärkere Verankerung der Elektrode in der Bohrung, denn auftretende Druckkräfte werden gleichmäßiger auf die Auflagefläche zwischen Kunststoff und Elektrodenschaft verteilt.

In einer zweckmäßigen Umsetzung besteht die Wandung des Messrohres aus PFA (Perfluoroalkoxyethylen) Kunststoff. Dieser besitzt eine geringe Festigkeit und Härte gegenüber anderen Materialien, ist dadurch leicht formbar und kann die Zwischenräume der Dichtlippen ausfüllen. Dies verbessert nochmals die

Verankerung der Elektrode.

Von Vorteil ist die Verwendung einer Stiftelektrode, die über einen zylindrischen Elektrodenkopf einen länglichen Elektrodenschaft sowie eine Buchse zum Anschluss einer Zuleitung verfügt.

Die Erfindung wird anhand der nachfolgenden Zeichnungen näher erläutert. Es zeigt:
Fig. 1: eine schematische Darstellung einer Ausgestaltung einer Vorrichtung zum Messen des Volumen- oder Massestroms eines Mediums in einer Rohrleitung und
Fig. 2: die Darstellung eines Querschnitts einer erfindungsgemäßen Elektrode die in eine aus einem plastischen Material bestehende Wandung eines Messrohres eingepresst ist.

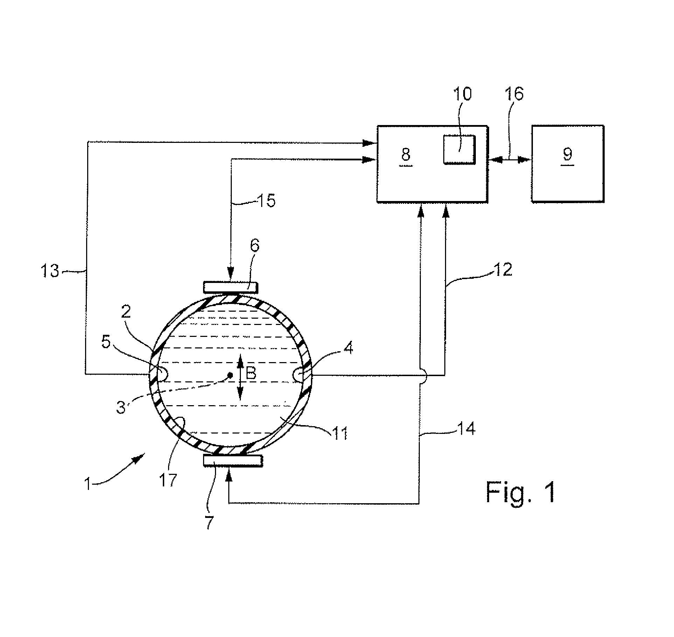

Figur 1 zeigt eine schematische Darstellung eines magnetisch-induktiven Durchflussmessgerätes 1. Das Messrohr 2 wird von dem Medium 11 in Richtung der Längsachse 3 des Messrohres 2 durchflossen. Das Medium 11 ist zumindest geringfügig elektrisch leitfähig. In dem Fall, dass das Messrohr 2 an seiner Innenfläche mit einem elektrisch leitfähigen Material gefertigt ist, muss das Messrohr 2 an seiner Innenfläche mit einem elektrisch nicht-leitfähigen Liner 17 ausgekleidet sein; der Liner 17 besteht vorzugsweise aus einem Material, das in hohem Maße chemisch und/oder mechanisch beständig ist.

Das senkrecht zur Strömungsrichtung des Mediums 11 ausgerichtete alternierende Magnetfeld B wird über ein Magnetsystem, z.B. über zwei diametral zueinander angeordnete Spulen 6, 7 bzw. über zwei Elektromagnete erzeugt.

Die Elektroden 4, 5 sind zwei einen zylindrischen Elektrodenkopf 20, einen länglichen in die Wandung des Messrohrs 21 eingebrachten Elektrodenschaft 22 und eine Buchse 19 zum Anschluss von elektrischen Verbindungsleitungen 12,13 aufweisende sog. Stiftelektroden.

Unter dem Einfluss des Magnetfeldes B wandern in dem Medium 11 befindliche Ladungsträger je nach Polarität zu den beiden eingesetzten gepolten Elektroden 4, 5 ab. Die sich an den Elektroden 4, 5 aufbauende Messspannung ist proportional zu der über den Querschnitt des Messrohres gemittelten Strömungsgeschwindigkeit des Mediums 11, d.h. sie ist ein Maß für den Volumenstrom des Mediums 11 in dem Messrohr 2. Das Messrohr 2 ist über in der Fig. 1 nicht gesondert dargestellte Verbindungselemente, z.B. Flansche, mit einer Rohrleitung verbunden, durch die das Medium 11 hindurchströmt.

Über elektrische Verbindungsleitungen 12, 13 sind die Elektroden 4, 5 mit der Regel-/Auswerteeinheit 8 verbunden. Die Verbindung zwischen den Spulen 6, 7 und der Regel-/Auswerteeinheit 8 erfolgt über die elektrischen Verbindungsleitung 16 mit einer Eingabe-/Ausgabeeinheit 9 verbunden. Der Auswerte-/Regeleinheit 8 ist die Speichereinheit 10 zugeordnet.

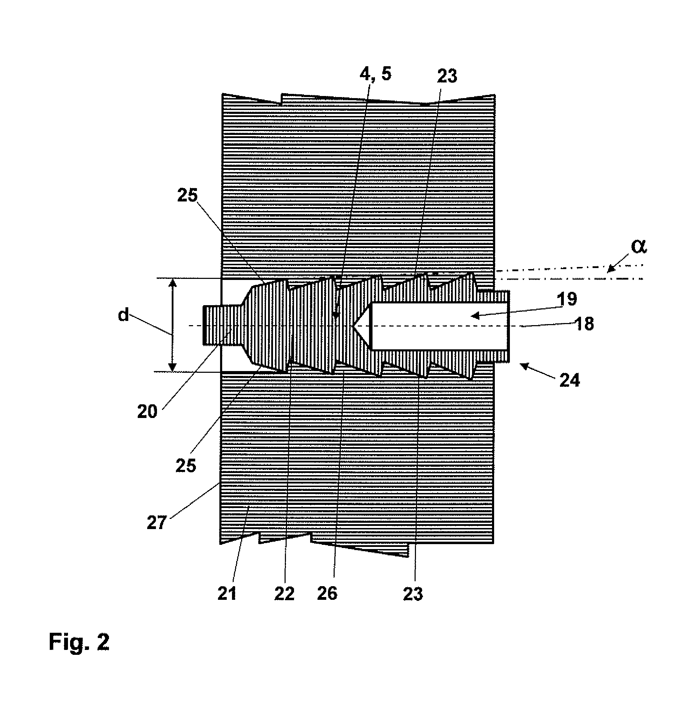

Figur 2 zeigt die Darstellung eines Querschnitts einer in die Bohrung 24 der aus einem plastischen Material bestehenden Wandung des Messrohres 21 eingepressten erfindungsgemäßen Elektrode 4, 5.

Das Messrohr 2 wird von einem elektrisch leitenden Medium 11, nicht explizit gezeigt, durchströmt, das mit der Elektrode 4, 5 koppelt, mit der sich, über eine im Elektrodenschaft 22 eingebrachte Buchse 19, die Messspannung abgreifen lässt. Dabei besteht die Elektrode 4, 5 aus einem korrosionsfesten Material, z.B. Tantal und die Wandung des Messrohres 21 besteht aus einem elektrisch nicht leitenden plastischen Material z. B. aus dem in vielen industriellen Bereichen aufgrund seiner Eigenschaften verwendeten Kunststoff PFA.

Der Elektrodenkopf 20 endet im Wesentlichen mit der Messrohrinnenseite 27, um eine Beeinflussung der Strömung des Mediums 11 zu vermeiden.

Der Elektrodenkopf 20 ist mit seiner Oberfläche dem durch das Medium 11 verursachten Betriebsdruck ausgesetzt. Dieser Druck besteht aus einem statischen Anteil, der der Kontaktfläche zwischen Medium und Elektrode 4, 5 proportional ist und einem dynamischen Anteil, der durch die Strömungsgeschwindigkeit hervorgerufenen wird. Der Betriebsdruck presst die Elektrode 4, 5 entlang ihrer Längsachse 18 aus der Bohrung 24 heraus.

Dem Herauspressen entgegen wirken die kegelstumpfförmigen Dichtlippen 23 des Elektrodenschafts 22, die sich im Material der Wandung des Messrohres 21 verankert haben. Die Dichtlippen 23 sind wie folgt angeordnet:
Der maximale Durchmesser, der nächsten auf den Elektrodenkopf 20 folgenden ersten kegelstumpfförmigen Dichtlippe 25, ist größer als der Durchmesser d der Bohrung 24 in die Wandung des Messrohres 21. Der maximale Durchmesser der nächsten auf die erste Dichtlippe 25 entlang der Längsachse 18 nach Außen hin folgenden zweiten Dichtlippe 23 ist größer als der maximale Durchmesser der ersten Dichtlippe 25. Der maximale Durchmesser der nächsten auf die zweite Dichtlippe 23 entlang der Längsachse 18 nach außen hin folgenden dritten Dichtlippe 23 ist wiederum größer als der maximale Durchmesser der zweiten Dichtlippe 23 und somit größer als der maximale Durchmesser der ersten Dichtlippe 25. Entsprechendes gilt für die folgenden Dichtlippen 23.

Der maximale Durchmesser der auf die vierte Dichtlippe 23 entlang der Längsachse 18 nach außen hin folgenden fünften Dichtlippe 23 ist größer als der maximale Durchmesser der vierten Dichtlippe 23 und hat den größten maximalen Durchmesser aller Dichtlippen 23.

Der größere maximale Durchmesser der der ersten Dichtlippe 25 nachfolgenden Dichtlippen 23 führt zu einem Eindringen der Kanten der Dichtlippen 23 über den Rand der Bohrung 24 hinaus in das die Bohrung 24 umgebende plastische Material hinein.

Die tannenbaumartige, konische Gesamtform der Elektrode 4, 5 mit widerhakenartigen, kegelstumpfförmigen Dichtlippen 23 und den mit einem plastischen Material, z.B. Kunststoff, aus der Umgebung der Bohrung 24 gefüllten Hinterschneidungen 26 gibt zusätzlichen Rückhalt gegen den Betriebsdruck.

Es lässt sich ein Winkel α festlegen, der den Grad der Kegelförmigkeit des Elektrodenschafts 22 relativ zur zylindrischen Grundform angibt. Der Winkel α bildet den Schnittwinkel zweier Geraden.

Betrachtet wird der Querschnitt durch die Längsachse 18 der Elektrode 4, 5. Da die Längsachse 18 der Elektrode 4, 5 den Querschnitt symmetrisch teilt, wird im Folgenden nur eine der symmetrischen Hälften betrachtet:
Die erste Gerade läuft parallel zur Längsachse 18 durch den Rand der Bohrung 24. Der Schnittpunkt der beiden Geraden ist der Punkt an dem die erste Dichtlippe 25 die Wand der Bohrung 24 berührt. Die zweite Gerade führt durch den Punkt an dem die erste Dichtlippe 25 die Wand der Bohrung 24 berührt und durch den Punkt des maximalen Durchmessers in der Wandung des Messrohrs 21 der letzten auf den Elektrodenkopf 20 folgenden Dichtlippe 23 der Elektrode 4, 5.

Aufgrund dieser Konizität verfügt die Elektrode 4, 5 über eine stärkere Verankerung in der Wandung des Messrohrs 21 und sichert die Elektrode 4, 5 besser gegen ein Herausdrücken infolge eines Innendrucks ab.

### Bezugszeichenliste

- 1: Magnetisch-induktives Durchflussmessgerät
- 2: Messrohr
- 3: Messrohrachse
- 4: Elektrode
- 5: Elektrode
- 6: Spulenanordnung / Magnetsystem
- 7: Spulenanordnung / Magnetsystem
- 8: Regel-/Auswerteeinheit
- 9: Eingabe-/Ausgabeeinheit
- 10: Speichereinheit
- 11: Medium
- 12: Verbindungsleitung
- 13: Verbindungsleitung
- 14: Verbindungsleitung
- 15: Verbindungsleitung
- 16: Verbindungsleitung
- 17: Liner
- 18: Längsachse der Elektrode
- 19: Buchse
- 20: Elektrodenkopf
- 21: Wandung des Messrohres
- 22: Elektrodenschaft
- 23: Dichtlippe
- 24: Bohrung
- 25: Auf den Elektrodenkopf folgende erste Dichtlippe
- 26: Hinterschneidungen
- 27: Messrohrinnenseite

## Patentansprüche

1. Elektrode (4, 5) für ein magnetisch-induktives Durchflussmessgerät (1) zur Bestimmung des Volumendurchflusses eines elektrisch leitenden Mediums (11) durch ein Messrohr (2), wobei das Messrohr (2) zumindest in dem Bereich in dem es mit dem Medium (11) in Kontakt kommt, nicht elektrisch leitend ist,
wobei die Elektrode (4, 5) einen Elektrodenschaft (22) und einen Elektrodenkopf (20) aufweist,
wobei der Elektrodenkopf (20) dazu dient, mit dem Medium (11) in Kontakt zu kommen, wobei der Elektrodenschaft (22) mehrere in Richtung der Längsachse der Elektrode (18) hintereinander liegende, kegelstumpfförmige Dichtlippen (23) aufweist und wobei der Elektrodenschaft (22) in eine Bohrung (24) mit einem Durchmesser (d) in die Wandung des Messrohrs (21) einpressbar ist und der maximale Durchmesser der dem Elektrodenkopf (20) am nächsten liegenden Dichtlippe (25) größer als der Durchmesser (d) der Bohrung (24) ist,
**dadurch gekennzeichnet,**
**dass** sich der maximale Durchmesser aufeinander folgender kegelstumpfförmiger Dichtlippen (23) mit zunehmendem Abstand vom Elektrodenkopf (20) vergrößert.

2. Elektrode (4, 5) nach Anspruch 1,
**dadurch gekennzeichnet,**
**dass** die Elektrode (4, 5) so in der Bohrung (24) verankerbar ist, dass der Elektrodenkopf (20) auf Höhe der Messrohrinnenseite (27) endet.

3. Elektrode (4, 5) nach Anspruch 1 oder 2,
**dadurch gekennzeichnet,**
**dass** beginnend mit der dem Elektrodenkopf (20) am nächsten liegenden Dichtlippe (25) der maximale Durchmesser einer Dichtlippe (23) größer ist als der einer vorhergehenden Dichtlippe (23)

4. Elektrode (4, 5) nach einem der Ansprüche 1-3,
**dadurch gekennzeichnet,**
**dass** die Elektrode (4, 5) eine konische Gesamtform aufweist.

5. Elektrode (4, 5) nach einem der vorhergehenden Ansprüche
**dadurch gekennzeichnet,**
**dass** die Elektrode (4, 5) eine Stiftelektrode ist.

6. Magnetisch-induktives Durchflussmessgerät (1) mit einer Elektrode (4, 5) nach einem der vorhergehenden Ansprüche.

7. Magnetisch-induktives Durchflussmessgerät (1) nach dem vorherigen Anspruch, **dadurch gekennzeichnet,**
**dass** die Wandung des Messrohres (21) zumindest im Bereich der Bohrung (24) aus einem plastisch verformbaren Material besteht.

8. Magnetisch-induktives Durchflussmessgerät (1) nach dem vorherigen Anspruch, **dadurch gekennzeichnet,**
**dass** die Wandung des Messrohres (21) zumindest im Bereich der Bohrung (24) aus PFA (Perfluoroalkoxyethylen) Kunststoff besteht.

## Claims

1. Electrode (4, 5) for an electromagnetic flowmeter (1) designed to determine the volume flow of an electrically conductive medium (11) through a measuring tube (2), wherein the measuring tube (2) is not electrically conductive at least in the area in which it comes into contact with the medium (11),
wherein the electrode (4, 5) has an electrode shaft (22) and an electrode head (20),
wherein the electrode head (20) is used to come into contact with the medium (11), wherein the electrode shaft (22) has several sealing lips (23) in the shape of a conical frustum which are situated one behind the other in the direction of the longitudinal axis of the electrode (18) and wherein the electrode shaft (22) can be pressed into a bore (24) of diameter (d) in the wall of the measuring tube (21), and the maximum diameter of the sealing lip (25) closest to the electrode head (20) is larger than the diameter (d) of the bore (24),
**characterized in that**
the maximum diameter of consecutive, conical frustum-shaped sealing lips (23) increases with increasing distance from the electrode head (20).

2. Electrode (4, 5) as claimed in Claim 1,
**characterized in that**
the electrode (4, 5) can be anchored in the bore (24) in such a way that the electrode head (20) ends at the height of the inside of the measuring tube (27).

3. Electrode (4, 5) as claimed in Claim 1 or 2,
**characterized in that**
starting with the sealing lip (25) closest to the electrode head (20), the maximum diameter of a sealing lip (23) is larger than that of a preceding sealing lip (23).

4. Electrode (4, 5) as claimed in one of the Claims 1 to 3,
**characterized in that**
the electrode (4, 5) has a conical overall shape.

5. Electrode (4, 5) as claimed in one of the previous claims,
**characterized in that**
the electrode (4, 5) is a pin electrode.

6. Electromagnetic flowmeter (1) with an electrode (4, 5) as claimed in one of the previous claims.

7. Electromagnetic flowmeter (1) as claimed in the previous claim, **characterized in that**
the wall of the measuring tube (21) is made from a plastically deformable material at least in the area of the bore (24).

8. Electromagnetic flowmeter (1) as claimed in the previous claim, **characterized in that** the wall of the measuring tube (21) is made from a PFA plastic (perfluoroalkoxy alcane) at least in the area of the bore (24).

## Revendications

1. Électrode (4, 5) pour un débitmètre magnéto-inductif (1) destiné à la détermination du débit volumique d'un produit électriquement conducteur (11) à travers un tube de mesure (2), le tube de mesure (2) étant électriquement non conducteur au moins dans la zone, dans laquelle il entre en contact avec le produit (11),
l'électrode (4, 5) présentant une tige d'électrode (22) et une tête d'électrode (20), la tête d'électrode (20) servant à entrer en contact avec le produit (11), la tige d'électrode (22) présentant plusieurs lèvres d'étanchéité (23) tronconiques situées les une derrière les autres en direction de l'axe longitudinal de l'électrode (18), et la tige d'électrode (22) pouvant être pressée dans un perçage (24) présentant un diamètre (d) dans la paroi du tube de mesure (21), et le diamètre maximal de la lèvre d'étanchéité située le plus près de la tête d'électrode (20) étant supérieur au diamètre (d) du perçage (24),
**caractérisée**
**en ce que** le diamètre maximal de lèvres d'étanchéité (23) tronconiques consécutives augmente à une distance croissante de la tête d'électrode (20).

2. Électrode (4, 5) selon la revendication 1,
**caractérisée**
**en ce que** l'électrode (4, 5) est ancrable dans le perçage (24) de telle sorte que la tête d'électrode (20) débouche au niveau de la face intérieure de tube de mesure (27).

3. Électrode (4, 5) selon la revendication 1 ou 2,
**caractérisée**
**en ce qu'**en partant avec la lèvre d'étanchéité (25) située le plus près de la tête d'électrode (20), le diamètre maximal d'une lèvre d'étanchéité (23) est supérieur à celui d'une lèvre d'étanchéité (23) précédente.

4. Électrode (4, 5) selon l'une des revendications 1 à 3,
**caractérisée**
**en ce que** l'électrode (4, 5) présente une forme globale conique.

5. Électrode (4, 5) selon l'une des revendications précédentes,
**caractérisée**
**en ce que** l'électrode (4, 5) est une électrode-tige.

6. Débitmètre magnéto-inductif (1) avec une électrode (4, 5) selon l'une des revendications précédentes.

7. Débitmètre magnéto-inductif (1) selon la revendication précédente, **caractérisé en ce que** la paroi du tube de mesure (21) est constituée d'un matériau plastique déformable au moins dans la zone du perçage (24).

8. Débitmètre magnéto-inductif (1) selon la revendication précédente, **caractérisé en ce que** la paroi du tube de mesure (21) est constituée d'un plastique PFA (perfluoroalkoxy) au moins dans la zone du perçage (24).
